# EUROPEAN PATENT SPECIFICATION

(11) **EP 3 045 777 B1**
(45) Date of publication and mention of the grant of the patent: **14.08.2024**
(21) Application number: 15305039.8
(22) Date of filing: 16.01.2015
(51) Int. Cl.: F16H 53/06

(54) **Cam follower**
Nockenfolger
Galet suiveur

(43) Date of publication of application: 20.07.2016
(73) Proprietor: Aktiebolaget SKF, 415 50 Göteborg (SE)
(72) Inventor: Hauvespre, Benoit, 37230 Saint Etienne de Chigny (FR); Jouanno, Guillaume, 37540 SAINT CYR SUR LOIRE (FR)
(74) Representative: Schonecke, Mitja

(56) References cited:
- EP-A1- 2 672 116
- EP-A1- 2 806 188
- US-A- 4 847 135
- US-A1- 2011 176 757
- KÖNIG KUNSTSTOFFE: "König GmbH Acrylglas und Kunststoffprodukte: PEEK Polyetheretherketon", 10 January 2014 (2014-01-10), XP055187888, Retrieved from the Internet <URL:http://web.archive.org/web/20140110024005/http://www.koenig-kunststoffe.de/kompaktplatten/peek-polyetheretherketon.html> [retrieved on 20150507]
- ANONYMOUS: "High performance Polymers / engineering polymers.", 16 July 2014 (2014-07-16), XP055187903, Retrieved from the Internet <URL:http://web.archive.org/web/20140716235436/http://www.tribology-abc.com/abc/polymers.htm> [retrieved on 20150507]
- KÖNIG KUNSTSTOFFE: "König GmbH Acrylglas und Kunststoffprodukte: PTFE Polytetrafluorethylen", 29 December 2013 (2013-12-29), XP055187895, Retrieved from the Internet <URL:http://web.archive.org/web/20131229064431/http://www.koenig-kunststoffe.de/kompaktplatten/ptfe-polytetrafluorethylen.html> [retrieved on 20150507]

## Description

### TECHNICAL FIELD OF THE INVENTION

The invention concerns a cam follower designed for cooperating with a cam in order to provide a reciprocating motion. For instance, this reciprocating motion may be used in the internal combustion engine of a vehicle.

### BACKGROUND OF THE INVENTION

Engine manufacturers strive to improve performance of internal combustion engines by maximizing the conversion of chemical energy into mechanical energy. The conversion efficiency may be improved by reducing friction between the moving parts of the engine. To this end, cam followers are designed for providing a rolling contact with the cam because a rolling contact induces less fiction than a sliding contact. Cam followers then include a rocker arm at the end of which a roller is located for contacting the cam. The roller is rotatably mounted around a shaft that is mounted inside a radial bore.

A further improvement is disclosed in JP-A-2005030569. It consists in applying an antifriction and wear resistant coating on the radial surface of the shaft. This coating may include Molybdenum disulfide (MoS₂), tungsten disulfide (WS₂) or fluorine polymer.

One may also think about diamond-like carbon (DLC) for coating the radial surface of the shaft. However, diamond-like carbon coating needs to be applied under high temperature conditions and requires pivoting the shaft around its revolution axis. Furthermore, it is quite expensive.

EP 2 806 188 A1 discloses a cam follower roller assembly comprising a body, a shaft mounted on the body and a roller rotatably mounted on said shaft. A radially outer surface of the shaft is coated with an antifriction coating comprising tungsten sulfide.

EP 2 672 116 A1 discloses a cam follower roller device for a fuel injection pump of an internal combustion engine, comprising a body, a shaft mounted on the body and a roller rotatably mounted on said shaft. The outer surface of the shaft is coated with an antifriction diamond like carbon coating.

### SUMMARY OF THE INVENTION

The invention intends to solve these drawbacks by proposing a cam follower with which the anti-friction and/or wear resistance coating is easier to apply and cheaper.

To this end, the invention concerns a cam follower, comprising a tappet, configured to be driven by a cam, a radial bore inside which a shaft is mounted, and a roller, that is rotatably mounted around the shaft for providing a rolling contact with the cam, at least the inner bore or a radial surface of the shaft being coated with an anti-friction and/or wear resistance coating layer. The coating layer includes polyetheretherketone. The coating layer is reinforced with glass or carbon fibers.

Thanks to the invention, a coating made of polyetheretherketone (PEEK) is easy to apply as it may be applied, through spraying, under low temperature conditions. Further, polyetheretherketone is less expensive than diamond-like carbon and provides a better sliding of the shaft inside the radial bore.

Further aspects of the cam follower which are advantageous but not compulsory are specified here-below:
- The thickness of the coating layer is between 1 and 5 µm, preferably equal to 3 µm.
- The coating includes polytetrafluoroethylene.
- The radial bore is delimited by the roller.
- The cam follower further comprises a bushing radially interposed between the roller and the shaft.
- The radial bore is delimited by the bushing.

### BRIEF DESCRIPTION OF THE DRAWINGS

The invention will now be explained in correspondence with the figures, and as an illustrative example, without restricting the object of the invention. In the figures:
- figure 1 is a schematic view of a cam assembly, comprising a camshaft cooperating with a cam follower according to the invention,
- figure 2 is a section of the cam follower of figure 1, according to a first embodiment of the invention, and
- figure 3 is a section similar to figure 2, representing a cam follower according to a second embodiment of the invention.

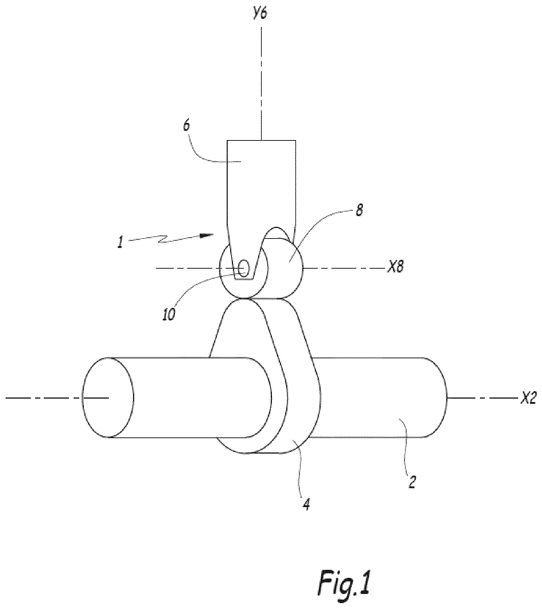

Figure 1 represents a cam assembly comprising a camshaft 2 configured to rotate around a revolution axis X2. An ovoid cam 4 is secured around the cam shaft 2 and cooperates with a cam follower 1. Cam follower 1 includes a tappet 6 extending along an axis Y6 that is perpendicular to axis X2. Tappet 6 is configured to be driven in translation by cam 4. More precisely, cam follower 1 cooperates with cam 4 to transform the rotating motion of cam 4 into a reciprocating motion along axis Y6. For instance, cam follower 1 may be used in an internal combustion engine of a vehicle. Cam follower 1 includes a roller 8 for providing a rolling contact with cam 4.

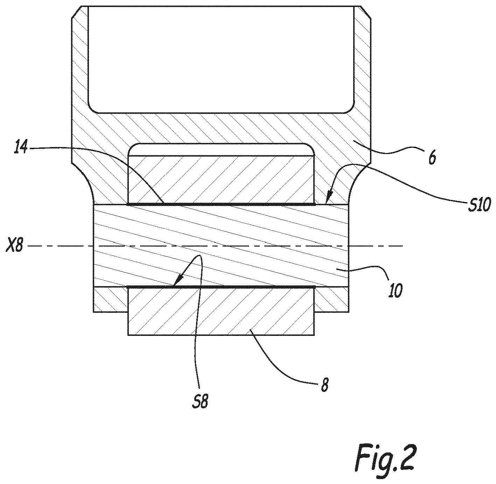

Roller 8 is tubular with a circular cross section and is rotatably mounted around a cylindrical shaft 10 that is formed at one end of tappet 6. Shaft 10 is of circular cross section and is secured to tappet 6, which means that it is motionless. More precisely, both extremities of shaft 10 are fixedly attached to tappet 6. Tappet 6 delimits holes for receiving shaft extremities. These holes may be blind holes or through holes. Shaft extremities may be welded, glued or caulked inside these holes. Roller 8 is configured to rotate around an axis X8 parallel to axis X2 when contacting cam 4. This axis X8 is superimposed with a revolution axis of shaft 10. A shown on figure 2, roller 8 delimits a radial bore S8 inside which shaft 10 is mounted. Radial bore S8 is defined by a cylindrical surface of circular cross section.

The radial surface S10 of shaft 10 is coated with a layer 14 by anti-friction coating. This coating layer 14 also provides wear resistance. It includes polyetheretherketone (PEEK).

PEEK coating layer is easy and cheap to apply as it may be applied through spraying under low temperature conditions. The thickness of the PEEK coating layer 14 is between 1 and 5 µm, preferably equal to 3 µm.

The PEEK coating is reinforced with glass or carbon fibers and may include polytetrafluoroethylene (PTFE) to lubricate the contact of shaft 10 inside bore S8. PTFE then provides a better sliding between roller 8 and shaft 10 and increases cam follower life-time. The coating may also be applied on the radial bore S8 of roller 8.

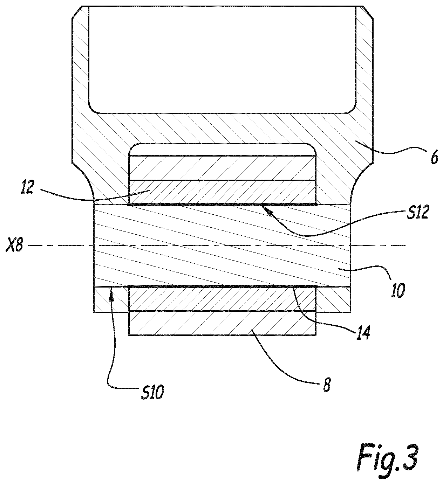

Figure 3 represents a second embodiment of a cam follower according to the invention.

Cam follower of figure 3 differs from that of figure 2 in that it further includes a bushing 12 that is radially interposed between roller 8 and shaft 10. As a result, shaft 10 is mounted within a radial bore S12 delimited by bushing 12. An anti-friction coating layer may be applied on the radial surface S10 of shaft 10 and/or on the radial bore S12 of bushing 12, as shown by layer 14 on this figure. On figures 2 and 3, the thickness of layer 14 is exaggerated, for the sake of clearly showing this layer 14.

In a non-represented alternative embodiment, the same cam follower may be used in a different cam assembly. For instance, cam follower 1 may be used in a wedge cam assembly or in a barrel cam assembly.

The embodiments and alternative embodiments mentioned here-above may be combined together to generate new embodiments of the invention, as far as they fall under the scope of the appended claims.

## Claims

1. Cam follower (1), comprising:
- a tappet (6), configured to be driven by a cam (4),
- a radial bore (S8 ; S12) inside which a shaft (10) is mounted, and
- a roller (8), that is rotatably mounted around the shaft (10) for providing a rolling contact with the cam (4), at least the inner bore (S8; S12) or a radial surface (S10) of the shaft (10) being coated with an anti-friction and/or wear resistance coating layer (14), **characterized in that** the coating layer (14) includes polyetheretherketone PEEK and **in that** the coating layer (14) is reinforced with glass or carbon fibers.

2. - Cam follower (1) according to claim 1, **characterized in that** the thickness of the coating layer (14) is between 1 and 5 µm, preferably equal to 3 µm.

3. - Cam follower (1) according to any previous claim, **characterized in that** the coating layer (14) includes polytetrafluoroethylene PTFE.

4. - Cam follower (1) according to any previous claim, **characterized in that** the radial bore (S8) is delimited by the roller (8).

5. - Cam follower (1) according to any previous claim, **characterized in that** the cam follower (1) further comprises a bushing (12) radially interposed between the roller (8) and the shaft (10).

6. - Cam follower (1) according to claim 5, **characterized in that** the radial bore (S12) is delimited by the bushing (12).

## Patentansprüche

1. Nockenstößel (1), umfassend:
- einen Stößel (6), der zum Antrieb durch einen Nocken (4) ausgestaltet ist,
- eine radiale Bohrung (S8; S12), in der eine Welle (10) montiert ist, und
- eine Rolle (8), die drehbar um die Welle (10) montiert ist, um für einen Rollkontakt mit dem Nocken (4) zu sorgen, wobei mindestens die innere Bohrung (S8; S12) oder eine radiale Fläche (S10) der Welle (10) mit einer Glattlack- und/oder Verschleißschutzbeschichtungsschicht (14) beschichtet ist,
**dadurch gekennzeichnet, dass** die Beschichtungsschicht (14) Polyetheretherketon PEEK aufweist und dass die Beschichtungsschicht (14) mit Glas- oder Kohlenstofffasern verstärkt ist.

2. Nockenstößel (1) nach Anspruch 1, **dadurch gekennzeichnet, dass** die Dicke der Beschichtungsschicht (14) zwischen 1 und 5 µm, vorzugsweise gleich 3 µm, beträgt.

3. Nockenstößel (1) nach einem der vorhergehenden Ansprüche, **dadurch gekennzeichnet, dass** die Beschichtungsschicht (14) Polytetrafluorethylen PTFE aufweist.

4. Nockenstößel (1) nach einem der vorhergehenden Ansprüche, **dadurch gekennzeichnet, dass** die radiale Bohrung (S8) durch die Rolle (8) begrenzt ist.

5. Nockenstößel (1) nach einem der vorhergehenden Ansprüche, **dadurch gekennzeichnet, dass** der Nockenstößel (1) ferner eine Buchse (12) umfasst, die radial zwischen der Rolle (8) und der Welle (10) angeordnet ist.

6. Nockenstößel (1) nach Anspruch 5, **dadurch gekennzeichnet, dass** die radiale Bohrung (S12) durch die Buchse (12) begrenzt ist.

## Revendications

1. Suiveur de came (1), comprenant :
- un poussoir (6), conçu pour être entraîné par une came (4),
- un alésage radial (S8 ; S12) à l'intérieur duquel un arbre (10) est monté, et
- un galet (8), monté de manière rotative autour de l'arbre (10) pour assurer un contact roulant avec la came (4), au moins l'alésage interne (S8 ; S12) ou une surface radiale (S10) de l'arbre (10) étant revêtu(e) d'une couche de revêtement (14) anti-frottement et/ou de résistance à l'usure,
**caractérisé en ce que** la couche de revêtement (14) comporte une polyétheréthercétone PEEK et **en ce que** la couche de revêtement (14) est renforcée par des fibres de verre ou de carbone.

2. Suiveur de came (1) selon la revendication 1, **caractérisé en ce que** l'épaisseur de la couche de revêtement (14) est comprise entre 1 et 5 µm, de préférence est égale à 3 µm.

3. Suiveur de came (1) selon une quelconque revendication précédente, **caractérisé en ce que** la couche de revêtement (14) comporte du polytétrafluoroéthylène PTFE.

4. Suiveur de came (1) selon une quelconque revendication précédente, **caractérisé en ce que** l'alésage radial (S8) est délimité par le galet (8).

5. Suiveur de came (1) selon une quelconque revendication précédente, **caractérisé en ce que** le suiveur de came (1) comprend en outre une bague (12) radialement intercalée entre le galet (8) et l'arbre (10) .

6. Suiveur de came (1) selon la revendication 5, **caractérisé en ce que** l'alésage radial (S12) est délimité par la bague (12).
